Europäisches Patentamt

European Patent Office

Office européen des brevets

(11) Numéro de publication: **0 186 598**
**A1**

## (12) DEMANDE DE BREVET EUROPEEN

(21) Numéro de dépôt: 85402608.5

(22) Date de dépôt: 23.12.85

(51) Int. Cl.⁴: **H 02 M 5/10**
**H 01 F 33/02**

(30) Priorité: 28.12.84 FR 8420046

(43) Date de publication de la demande:
02.07.86 Bulletin 86/27

(84) Etats contractants désignés:
DE GB

(71) Demandeur: TRAILIGAZ"Cie GENERALE DE L'OZONE"
29-31 boulevard de la Muette
F-95140 Garges-Les-Gonesse(FR)

(72) Inventeur: Chapsal, Paul
28 rue de l'Agriculture
F-92700 Colombes(FR)

(72) Inventeur: Petitimbert, Jean-François
1 allée des Accacias
F-95260 Mours(FR)

(74) Mandataire: Polus, Camille et al,
c/o Cabinet Lavoix 2, Place d'Estienne d'Orves
F-75441 Paris Cedex 09(FR)

(54) Dispositif d'alimentation électrique triphasée pour un ozoneur.

(57) Dispositif d'alimentation à partir du réseau triphasé d'un ozoneur comportant au moins deux éléments d'effluvation (7,8) à caractère capacitif, caractérisé en ce qu'il comporte deux transformateurs monphasés (1, 2) à entrefers (5,6) élévateurs de tension connectés en montage Scott, branchés entre le réseau triphasé et lesdits éléments d'effluvation (7,8).

FIG.2

Croydon Printing Company Ltd.

La présente invention est relative aux appareils générateurs d'ozone ou ozoneurs et concerne plus particulièrement les dispositifs d'alimentation électriques de ces appareils.

Les ozoneurs connus comportent en général plusieurs éléments d'effluvation capacitifs comprenant chacun deux électrodes qui sont séparées par un diélectrique solide et un diélectrique gazeux constitué par le gaz dans lequel doit se produire l'effluve.

Le dispositif d'alimentation électrique d'un tel ozoneur comprend un transformateur monophasé dont le primaire est alimenté en courant alternatif à partir du réseau et dont les bornes du secondaire sont reliées respectivement auxdites électrodes.

L'effluvation productrice d'ozone est engendrée par l'application aux armatures des éléments capacitifs d'une tension alternative d'une valeur supérieure à une tension de seuil.

A chaque production d'effluve, la résistance électrique du milieu gazeux s'annule de sorte que le circuit présente une variation d'impédance telle qu'il s'y établit sous l'action de la tension sinusoïdale appliquée au primaire du transformateur, un régime de courant à caractère non sinusoïdal comportant de nombreux harmoniques dont certains tels que l'harmonique d'ordre 3 peuvent atteindre 80% de l'amplitude du terme fondamental.

L'établissement d'un régime non sinusoïdal a pour conséquence une diminution du coefficient de puissance de l'ozoneur, diminution qui est d'autant plus importante que le courant est plus déformé.

Cette déformation du régime de courant se répercute en outre dans le circuit primaire du trans-

2

formateur sous la forme d'une diminution importante du coefficient de puissance à l'alimentation de ce transformateur.

Afin de remédier à cet inconvénient, on a proposé d'utiliser un transformateur à entrefer de façon à produire un rephasage du courant absorbé au réseau, par rapport à la tension d'alimentation.

Cependant, un tel rephasage ne porte que sur le terme fondamental du courant de sorte que le coefficient de puissance du primaire du transformateur reste très inférieur à 1 et que le rendement global de l'installation reste faible.

Le brevet français n° 1 533 302 décrit un dispositif d'alimentation électrique pour un appareil générateur d'ozone comprenant un transformateur à entrefer dont le primaire est alimenté en courant alternatif à partir du réseau monophasé et une inductance montée en série dans le circuit d'alimentation du primaire du transformateur et destinée en s'ajoutant à l'inductance d'entrefer du transformateur à produire le rephasage de l'harmonique d'ordre 3 du courant et de ce fait une augmentation du coefficient de puissance du primaire du transformateur et de l'ozoneur, ainsi qu'une augmentation de la tension de crête appliquée à l'ozoneur.

Un agencement du type précité donne toute satisfaction en régime d'alimentation monophasé.

Cependant, cet appareil monophasé à prépondérance capacitive et dont la caractéristique d'impédance est non linéaire présente les inconvénients suivants.

a) Il peut être difficilement utilisé sur un réseau triphasé sans le déséquilibrer;

b) le courant d'alimentation de l'ozoneur étant en avance sur la tension, le facteur de puissance est mauvais;

c) le taux d'harmoniques non négligeable du courant appliqué à l'ozoneur entraine des risques de perturbation du réseau.

L'invention vise donc à créer un dispositif d'alimentation pour ozoneur qui puisse être alimenté à partir du réseau triphasé et qui soit capable de fonctionner dans des conditions de rendement optimales.

Elle a donc pour objet un dispositif d'alimentation à partir du réseau triphasé d'un ozoneur comportant au moins deux éléments d'effluvation à caractère capacitif, caractérisé en ce qu'il comporte deux transformateurs monophasés à entrefers élévateurs de tension connectés en montage Scott, insérés entre le réseau triphasé et lesdits éléments d'effluvation.

Grâce à un tel agencement, on obtient une compensation des courants capacitifs des éléments d'effluvation de l'ozoneur par les courants magnétisants des transformateurs du montage Scott dus à la présence d'entrefers des circuits magnétiques de ces transformateurs.

Selon une caractéristique particulière de l'invention, le dispositif d'alimentation comporte en outre une inductance triphasé en série avec chaque phase du réseau constituée de trois bobines montées sur un circuit magnétique commun.

La présence d'une telle inductance permet d'assurer la maitrise du taux d'harmoniques ainsi que le rephasage et l'équilibrage du système.

L'invention sera mieux comprise à l'aide de la description qui va suivre, donnée uniquement à titre d'exemple et faite en se référant aux dessins annexés, sur lesquels :

4

- la Fig.1 est un schéma équivalent d'un ozoneur;

- la Fig.2 est un schéma électrique du dispositif d'alimentation d'un ozoneur à partir du réseau triphasé suivant l'invention;

- les Fig.3a à 3c montrent des courbes de déformations du courant d'alimentation du champ magnétique en fonction de la variation d'impédance de l'ozoneur;

- la Fig.4 est un diagramme vectoriel des tensions et des courants du dispositif d'alimentation de la Fig.2;

- les Fig.5a et 5b montrent respectivement les tensions d'alimentation et les tensions sur les faces de l'ozoneur alimenté par le dispositif de la Fig.2; et

- la Fig.6 est un diagramme montrant les résultats que permet d'obtenir le dispositif suivant l'invention.

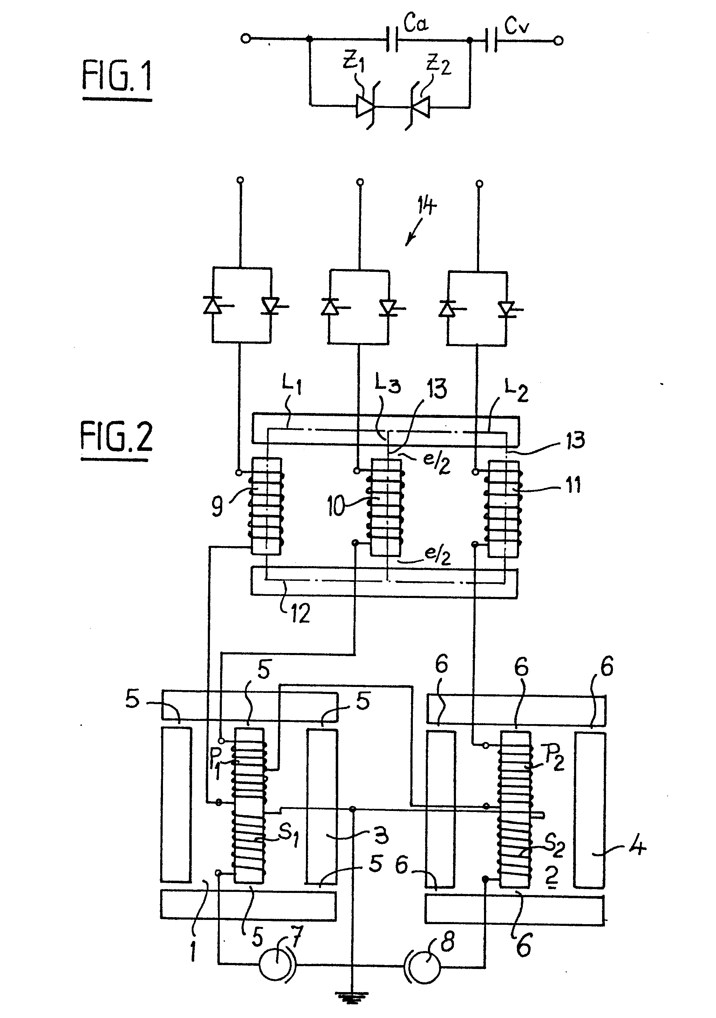

Le schéma équivalent d'un ozoneur représenté à la Fig.1 comporte deux condensateurs Ca et Cv montés en série, le condensateur Ca étant shunté par deux diodes Zener Z1,Z2 montées en opposition.

Le dispositif d'alimentation triphasé suivant l'invention est représenté à la Fig.2.

Ce dispositif comporte essentiellement deux transformateurs élévateurs de tension 1 et 2 dont les circuits magnétiques respectifs 3 et 4 comportent des entrefers 5,6 entre les diverses branches.

Les transformateurs sont connectés au réseau d'alimentation triphasé et aux éléments d'effluvation 7,8 selon le montage Scott.

Le primaire P1 du transformateur 1 est connecté par ses deux bornes à deux phases différentes du réseau et son point milieu est connecté à une borne du primaire P2 du transformateur 2. L'autre borne du primaire P2 est connectée à la troisième phase du réseau.

Dans chacune des phases du réseau est monté en série un bobinage 9,10,11. Les trois bobinages précités sont portés par un circuit magnétique commun 12 pourvu d'entrefers 13 et forment ainsi une inductance triphasée.

Les secondaires S1 et S2 des transformateurs 1 et 2 sont connectés respectivement aux bornes des éléments d'effluvation 7 et 8 de l'ozoneur.

L'ensemble ainsi constitué est alimenté par le réseau triphasé par l'intermédiaire d'un gradateur classique à découpage d'onde 14.

Le primaire P1 du transformateur 1 comporte deux fois $\underline{\frac{N1\sqrt{3}}{2}}$ spires et son secondaire S1 comporte N2 spires.

Le primaire P2 du transformateur 2 comporte N1 spires et son secondaire S2, N2 spires.

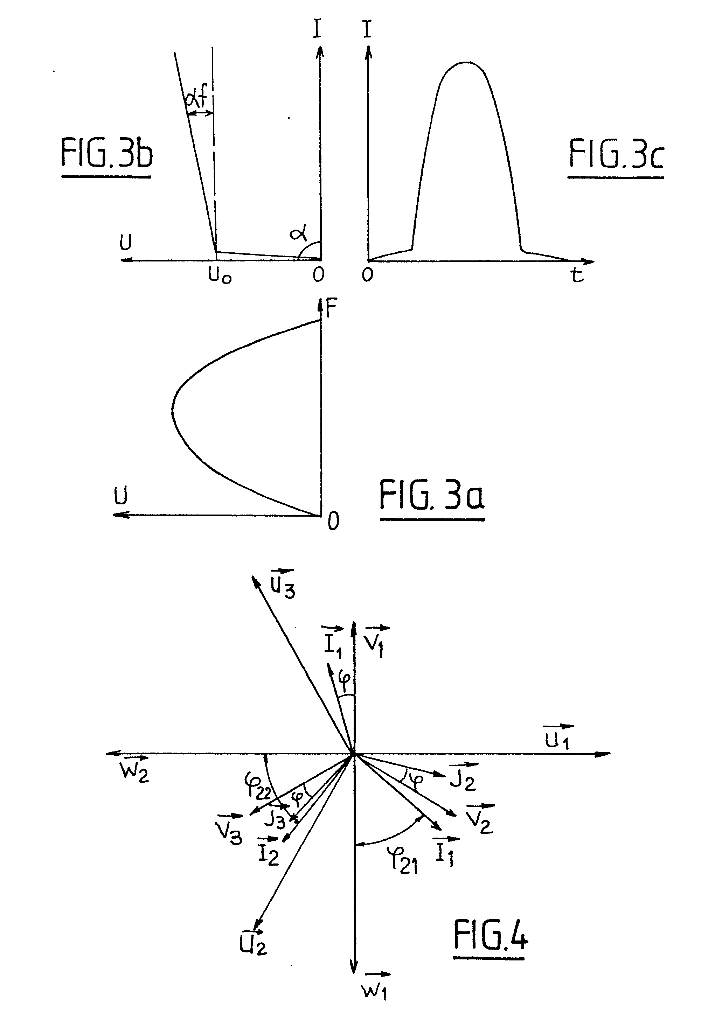

Le fonctionnement du dispositif décrit ci-dessus va être étudié en regard des graphiques donnés aux Fig.3a à 6.

Sur la Fig.3a, on a représenté une demi-période de la tension d'alimentation appliquée à une phase du dispositif.

Le fonctionnement d'un tube ozoneur donne une courbe courant, tension idéalisée représentée à la Fig.3b.

La structure d'un ozoneur étant celle représentée à la Fig.1, son impédance avant l'amorçage est donnée par la relation :

$$Zi = Za + Zv = tg\alpha i \qquad (1)$$

Après l'amorçage, l'impédance de l'ozoneur est :

6

$$Zf = Zv = tg \propto f \tag{2}$$

L'ozoneur étant un circuit RC, le courant est donc en avance sur la tension.

Partant de la courbe U = f(t) de la Fig.3a, on détermine la courbe i = f (t) représentée à la Fig.3c sans tenir compte des harmoniques.

Les équations des tensions des transformateurs 1 et 2 sont les suivantes :

$$\overrightarrow{W1} = - \frac{2 N2}{\sqrt{3}N1} \overrightarrow{U'} \tag{3}$$

$$\overrightarrow{W2} = - \frac{N2}{N1} \overrightarrow{U1} \tag{4}$$

dans lesquelles W1 et W2 sont les tensions aux bornes des secondaires S1 et S2, U' et U1 sont les tensions aux bornes des primaires de ces transformateurs.

Les équations des courants de ces transformateurs sont :

$$\overrightarrow{I1} = - \frac{2 N2}{\sqrt{3} N1} \overrightarrow{I1} - j \frac{\overrightarrow{U'}}{L1\omega} \tag{5}$$

$$\overrightarrow{I3} = \frac{N2}{N1} ( \frac{1}{\sqrt{3}} \overrightarrow{I1} - \overrightarrow{I2} ) + j ( \frac{\overrightarrow{U'}}{2L_1\omega} - \frac{\overrightarrow{U1}}{L2\omega} ) \tag{6}$$

$$\overrightarrow{I2} = \frac{N2}{N1} ( \frac{1}{\sqrt{3}} \overrightarrow{I1} + \overrightarrow{I2} ) + j ( \frac{\overrightarrow{U'}}{2L_1\omega} + \frac{\overrightarrow{U1}}{L2\omega} ) \tag{7}$$

L1 et L2 étant les inductances fictives "primaires" créant le courant magnétisant correspondant aux entrefers.

Le montage de la Fig.2 permet d'obtenir une compensation de la puissance réactive.

Il s'agit d'une compensation obtenue par une compensation "série" permettant la compensation d'une partie de l'énergie réactive de l'ozoneur et surtout le blocage des courants harmoniques de l'ozoneur, et par une compensation parallèle assurant la compensa-

7

tion de l'énergie réactive dans sa majeure partie.

On appelle taux de compensation mixte, le rapport qui existe entre la compensation "série" et la compensation totale (série + parallèle) dont la valeur correspond à la puissance réactive capacitive des tubes de l'ozoneur.

La compensation parallèle est en fait due aux entrefers 5,6 des transformateurs 1 et 2.

La compensation série est obtenue par la présence de l'inductance triphasée à entrefers.

On se référera à nouveau à la Fig.2 pour suivre l'exposé ci-après.

La réluctance R de chaque entrefere est donnée par la relation :

$$R = \frac{e}{\mu_o S} \qquad (8)$$

La réluctance totale du circuit 3 est :

$$R_{T3} = \frac{1}{\mu_o S} \left( e + \frac{\ell_3}{\mu_r} \right)$$

$\mu_o$ et $\mu_r$ sont respectivement les permabilités magnétiques de l'air et du matériau du circuit magnétique.

La réluctance totale des circuits 1 et 2 est :

$$R_{T2} = R_{T1} = \frac{1}{\mu_o S} \left( e + \frac{\ell}{\mu_r} \right)$$

Ainsi qu'on peut le voir, l'entrefer est prépondérant car 1 et 13 sont divisés par $\mu_r$.

Ceci permet donc d'écrire la relation :

$$R_{T1} \simeq R_{T3} \simeq R_{T2} \qquad (9)$$

La loi Ni = $R\Phi$ permet de trouver un équilibrage de courant du à une même différence de pote-

8

tiel électromagnétique.

Le diagramme vectoriel de la Fig.4 permet d'illustrer la compensation en courant qu'assure le dispositif suivant l'invention.

Sur ce diagramme, les valeurs indiquées sont les suivantes :

$\vec{W}_1$, $\vec{W}_2$  Tensions aux secondaires $S_1$,$S_2$ des transformateurs 1 et 2 du montage Scott.

$\vec{I}_1$, $\vec{I}_2$  Courants secondaires.

$\vec{V}_1$,$\vec{V}_2$,$\vec{V}_3$  Tensions simples aux primaires $P_1$,$P_2$.

$\vec{U}_1$,$\vec{U}_2$,$\vec{U}_3$  Tensions composées aux primaires.

$\vec{J}_1$,$\vec{J}_2$,$\vec{J}_3$  Courants primaires.

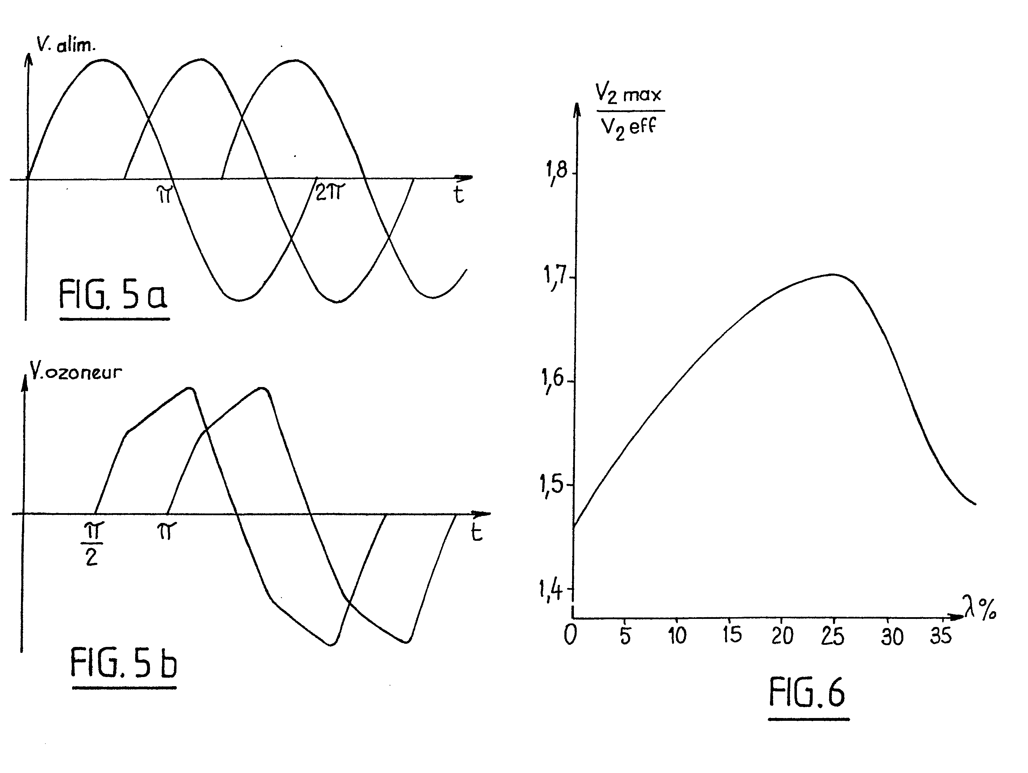

Les diagrammes des Fig.5a et 5b montrent respectivement les allures des tensions triphasées d'alimentation du dispositif et des tensions diphasées appliquées aux faces de l'ozoneur.

Ces tensions diphasées ont des formes présentant une distorsion par rapport aux formes sinusoïdales des tensions d'alimentation mais qui, du fait de la compensation du taux d'harmoniques et du déphasage obtenue à l'aide du dispositif de l'invention permettent d'obtenir sur l'ozoneur un rendement fortement amélioré vis à vis des dispositifs connus.

Sur la Fig.6, on a représenté les variations du rapport $\frac{U2max}{U2\ eff}$ en fonction de $\lambda$ qui est le taux de compensation mixte.

Le rendement de l'ozoneur est proportionnel à ce rapport appelé facteur de crête.

Pour $\lambda$ = o, le facteur de crête est inférieur à 1,5, il passe par un maximum voisin de 1,7 demeure pour $\lambda$ = 25% environ et supérieur à 1,6 jusqu'à $\lambda$ = 30% environ.

Ceci est obtenu en raison du fait que pour chaque phase l'inductance en série 9,10,11 introduit

9

un rephasage de l'harmonique d'ordre 3 alors que l'onde fondemantale est remise en phase par l'inductance d'entrefer.

Dans le présent mode de réalisation, le coefficient $\lambda$ est avantageusement compris entre 25 et 30%.

Le montage qui vient d'être décrit présente outre les avantages d'un rendement accru en raison de son alimentation à partir du réseau triphasé, celui de permettre de disposer les deux parties du montage Scott à proximité des éléments d'effluvation 7,8 de l'ozoneur, ce qui supprime la nécessité d'utiliser des lignes de transport d'énergie à haute tension et entraîne une réduction du coût et une amélioration de la sécurité de l'ensemble.

10

## REVENDICATIONS

1. Dispositif d'alimentation à partir du réseau triphasé d'un ozoneur comportant au moins deux éléments d'effluvation (7,8) à caractère capacitif, caractérisé en ce qu'il comporte deux transformateurs monophasés (1,2) à entrefers (5,6) élévateurs de tension connectés en montage Scott, branchés entre le réseau triphasé et lesdits éléments d'effluvation (7,8).

2. Dispositif d'alimentation suivant la revendication 1, caractérisé en ce que le dispositif d'alimentation comporte en outre une inductance triphasé en série avec chaque phase du réseau constituée de trois bobines (9,10,11) montées sur un circuit magnétique commun (12).

3. Dispositif d'alimentation suivant la revendication 2, caractérisé en ce que le circuit magnétique commun aux trois bobines (9,10,11) est un circuit magnétique à entrefers.

0186598

FIG.1

FIG.2

FIG.3b

FIG.3c

FIG.3a

FIG.4

FIG.5a

FIG.5b

FIG.6

Office européen
des brevets

**RAPPORT DE RECHERCHE EUROPEENNE**

EP  85 40 2608

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| A | US-A-2 748 338  (J.W. WILLIAMSON) <br> * Colonne 3, lignes 37-66 * <br><br> ----- | 1 | H 02 M   5/10 <br> H 01 F   33/02 |

| | |
|---|---|
| | **DOMAINES TECHNIQUES RECHERCHES (Int. Cl.4)** <br><br> H 02 M <br> H 01 F <br> H 02 P <br> H 02 J <br> G 05 F <br> C 01 B |

Le présent rapport de recherche a été établi pour toutes les revendications

| Lieu de la recherche | Date d'achèvement de la recherche | Examinateur |
|---|---|---|
| LA HAYE | 25-02-1986 | KERN H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82